# EUROPÄISCHE PATENTSCHRIFT

(11) **EP 0 324 714 B1**
(45) Veröffentlichungstag und Bekanntmachung des Hinweises auf die Patenterteilung: **21.02.1996**
(21) Anmeldenummer: 89730005.9
(22) Anmeldetag: 12.01.1989
(51) Int. Cl.: B29C 51/00, B29B 15/00

(54) **Textiles Flächenmaterial**
Flat textile material
Matériel textile plan

(30) Priorität: 12.01.1988 DE 3801020
(43) Veröffentlichungstag der Anmeldung: 19.07.1989
(73) Patentinhaber: TEXTEC TEXTIL ENGINEERING UND CONSULTING GMBH, D-13509 Berlin (DE)
(72) Erfinder: Klecka, Marcel, D-1000 Berlin 28 (DE); Schetter, Roland, D-1000 Berlin 13 (DE)
(74) Vertreter: Maikowski, Michael, Dipl.-Ing. Dr.

(56) Entgegenhaltungen:
- WO-A-88/01932
- DE-A- 2 363 767
- FR-A- 2 600 007
- GB-A- 1 005 951
- US-A- 2 378 642
- US-A- 3 264 392

## Beschreibung

Die Erfindung betrifft ein textiles Flächenmaterial nach dem Oberbegriff des Patentanspruchs 1, und ein Verfahren zu dessen Herstellung und die Verwendung eines derartigen Flächenmaterials.

Im "Hoechst High Chem"-Magazin 3/1987 wird auf den Seiten 54 bis 56 ein Filigran-Werkstoff mit Netzstruktur beschrieben. Zur Herstellung dieses Werkstoffes wird ein mit Kunstharz beschichtetes gewebtes, gewirktes oder gestricktes textiles Flächenmaterial im Tiefziehverfahren verformt, wobei das Kunstharz aushärtet. Dabei wird ein mit Kunstharz imprägniertes Kettgewirke zu einem klebefreien Halbzeug, dem Prepreg, vorgetrocknet und durch Tiefziehen unter Wärme verformt.

Ein derartiges Verfahren kann nicht kontinuierlich durchgeführt werden. Die mit Kunstharz getränkte Maschenware muß in der Tiefziehform aushärten. Dies erfordert erhebliche Standzeiten. Die zum Aushärten verwendeten Kunstharze, die dem Werkstoff neben der Festigkeit noch wünschenswerte physikalische Eigenschaften erteilen sollen, können nicht beliebig gewählt werden, sondern müssen mit der Wärmeaushärtung beim Tiefziehen kompatibel sein. Dies bringt eine Einschränkung der verwendbaren Kunstharzpalette mit sich. Darüber hinaus weist dieser Filigran-Werkstoff mit Netzstruktur, dadurch, daß er seine Formbeständigkeit durch ein gehärtetes Kunstharzgerüst erhält, eine gewisse Sprödigkeit auf, die es biespielsweise nicht zuläßt, diesen Werkstoff mit beliebig kleinen Krümmungsradien zu biegen.

Die DE 36 34 294 A1 beschreibt einen Tufting-Teppich der aus einem Grundgewebe, Polfäden und einer Rückenverfestigung besteht. Die Garne des Grundgewebes ermöglichen eine einmalige Dehnung bis zu 100%, so daß der Tufting-Teppich zum Einbau als Innenverkleidung von Kraftfahrzeugen durch Krafteinwirkung dauerhaft verformt werden kann.

Aus der DE 35 21 479 ist die Verwendung eines Garnes aus synthetischen vororientierten, unverstreckten Filamenten zur Herstellung eines verformbaren Flächengebildes bekannt. Die Filamente werden vor dem Weben, Sticken oder Wirken einer Wärmebehandlung unterzogen. Das Garn läßt sich dann wegen der Erhöhung der Fließspannung ohne Gefahr einer unbeabsichtigten Verstreckung verarbeiten und das auf diese Weise hergestellte textile Flächengebilde kann dann - beispielsweise durch Tiefziehen - bleibend verformt werden. Bei einer Weiterverbarbeitung des tiefgezogenen Flächengebildes zur Herstellung eines Fertigproduktes unter Wärmebehandlung tritt jedoch ein Memory-Effekt auf, so daß die durch Tiefziehen erzeugte Struktur wieder verloren geht. Dadurch verliert dieser Werkstoff die wichtigen mechanischen Eigenschaften hinsichtlich der Festigkeit und Tragfähigkeit.

Der Erfindung liegt die Aufgabe zu Grunde, ein unverharztes textiles Flächengebilde zu schaffen, dessen Eigenschaften an eine große Anzahl von Verwendungsmöglichkeiten als weiter zu verarbeitender Werkstoff ohne weiteres angepaßt werden kann.

Erfindungsgemäß wird diese Aufgabe durch die technische Lehre der Patentansprüche 1 und 2 gelöst.

Für die Herstellung des erfindungsgemäßen textilen Flächenmaterials werden synthetische Filamentgarne verwendet, die mindestens teilweise nicht verstreckt oder orientiert sind. Es werden zur Herstellung dieser textilen Flächenmaterialien synthetische Filamentgarne verwendet, die beispielsweise als POY-, LOY- und MOY-Garne bezeichnet werden. Deren Molekülketten sind nur zum Teil linear ausgerichtet und somit noch verstreckbar, dehnbar und verformungsfähig.

Die Struktruierung des aus derartigen synthetischen Filamentgarnen hergestellten, insbesondere gewebten, gewirkten oder gestrickten, textilen Flächenmaterials erfolgt derart, daß dabei diese Filamentgarne zumindestens teilweise unter Wärmeeinwirkung verstreckt oder orientiert werden. Ein durch diese Verformung des unverharzten textilen Flächenmaterials hergestellter dreidimensional strukturierter Werkstoff erhält durch die Wärmeformverstreckung eines Teiles der Filamentgarne seine Formbeständigkeit, die bei dem bekannten Verfahren erst durch Auftragen und Aushärten des Kunstharzes auf das Flächenmaterial vor der Verformung erzielt wird.

Das so hergestellte, unverharzte strukturierte textile Flächenmaterial ist ein geschmeidiges, flexibles und dehnbares Material und kann in der hergestellten Form in gewünschter Weise weiter verarbeitet werden. Insbesondere ist dieses strukturierte textile Flächenmaterial als Werkstoff derartig geschmeidig, daß es mit geringen Krümmungsradien gebogen und in jede gewünschte Form gebracht werden kann.

Die mechanische Wärmeformverstreckung wird so durchgeführt, daß das textile Flächenmaterial durch dreidimensional strukturierte Elemente, wie beispielsweise Noppen, Vorsprüngen, Rippen, Wellungen, Kegelstumpfgebilden und dergleichen profiliert wird. Es ist aus der Werkstoffkunde allgemein bekannt, daß flächige Gebilde durch Einprägung ausgewählter dreidimensionaler Strukturen vorbestimmte, wünschenwerte mechanische Eigenschaften hinsichtlich der Festigkeit, Steifigkeit und dergleichen erhalten. Von dieser Technik wird bei der mechanischen Wärmeformverstrekcung des textilen Flächenmaterials Gebrauch gemacht.

Um dem dreidimensional strukturierten, unverharzten Flächenmaterial als Werkstoff vorbestimmte, gewünschte Eigenschaften zu erteilen, wird dieses als Träger von eingearbeiteten Filamenten oder Gespinsten aus Kohle, Glas, Aramid, Gemischen aus diesen und/oder Naturfasern, insbesondere Wolle, Baumwolle, Cellulosefasern oder dergleichen oder deren Gemische verwendet.

Mit besonderem Vorteil wird das textile, unverharzte Flächenmaterial unter Anwendung von Druck und Wärme im Naß- oder Trockenverfahren verformt. Dadurch wird das glatte, ebene gewirkte, gewebte oder gestrickte Textilmaterial zu einem dreidimensionalen Strukturmaterial dauerhaft verformt. Die Molekülketten der Filamentgarne werden dabei weitgehend orientiert, wodurch die erzielte Form ohne Zusatz von Kunstharz bereits permanent fixiert wird.

Mit besonderem Vorteil wird das textile Flächenmaterial zur Strukturierung bei der mechanischen Wärmeformverstreckung tiefgezogen.

Mit Vorteil werden zur weiteren Verfestigung des dreidimensional strukturierten textilen Flächenmaterials Harze unterschiedlicher Typen und Konsistenz in variablen Mengen aufgebracht. Durch dieses fakultative, nachträgliche Aufbringen des Harzes, unabhängig von der Strukturierung des textilen Flächenmaterials können die Harze und deren Schichtdicke so gewählt werden, daß das dreidimensional strukturierte textile Flächenmaterial als Werkstoff gewünschte Eigenschaften erhält.

Mit Vorteil werden Duroplaste, Thermoplaste, Zweikomponentensysteme, licht- und strahlenhärtende Systeme, Lacke und dergleichen aufgebracht. Dabei werden Sprühverfahren, Gießverfahren oder Tauchverfahren angewendet. Es können auch Kombination dieser Harze verwendet werden. Die Aushärtung der Harze erfolgt unter Einsatz von Wärme und/oder Strahlen.

Mit Vorteil besteht die Möglichkeit, daß diese Harze zur Erzielung gewünschter physikalischer Eigenschaften erst nach dem Einbau oder der Anordnung des dreidimensional strukturierten, unverharzten textilen Flächenmaterials als Werkstoff an oder in seiner Verwendungsstelle aufgebracht werden, d.h. die Harze können auf den Werkstoff in situ aufgebracht werden.

Dem erfindungsgemäßen dreidimensionalen strukturierten textilen Flächenmaterial können als Werkstoff durch Einsatz unterschiedlicher Harze (Verfestigungsprodukte) und verschiedener Aufbringungsverfahren gewünschte Eigenschaften für eine Vielzahl unterschiedlicher Einsatzzwecke erteilt werden, insbesondere spezifische Eigenschaften, wie beispielsweise hart, weich, flexibel, weiter verformbar, flammresistent und dergleichen.

Es liegt im Rahmen der Erfindung, in das flexible strukturierte Flächenmaterial Leitungs- und/oder Leitersystem einzuarbeiten. Es können elektrische Leiter oder Leitungssysteme für Materialströmungen wie Luft, Wasser oder dergleichen vorgesehen werden.

Mit besonderem Vorteil wird das erfindungsgemäße dreidimensional strukturierte textile Flächenmaterial als Werkstoff zur Herstellung von Verbundwerkstoffen verwendet. Mit diesem Werkstoff werden insbesondere Sandwich-Bauelemente hergestellt.

Weiterhin wird das strukturierte textile Flächenmaterial als Werkstoff mit Vorteil zur Fertigung akustischer Bauelemente verwendet. Mit diesem Werkstoff können Schallschluckplatten, Schalldämmplatten oder auch schwingende Elemente zur Schallerzeugung oder Schallverstärkung hergestellt werden.

Das erfindungsgemäße strukturierte textile Flächenmaterial wird als Werkstoff ferner zur Herstellung von wärmedämmendem Baumaterial, d. h. von thermisch isolierenden Bauelementen verwendet. Ferner werden Brandschutzelemente mit diesem Werkstoff hergestellt.

Mit besonderem Vorteil wird dieses dreidimensional strukturierte textile Flächenmaterial als Werkstoff zur Verkleidung von Hohlrauminnenwandungen verwendet, insbesondere bei der Hohlraumausschäumung mittels Kunststoffen. Dies ist für den allgmeinen Maschinenbau, Flugzeugbau, Automobilbau und dergleichen von Bedeutung.

Das erfindungsgemäß hergestellte dreidimensional strukturierte textile Flächenmaterial ist als Werkstoff ein leichtbauendes, hochfestes Baumaterial, das sich für den Flugzeug- und Schiffsbau und allgemeinen für eine erstrebte Leichtbauweise hervorragend eignet.

## Patentansprüche

1. Verfahren zur Herstellung eines gewebten, gewirkten oder gestrickten textilen Flächenmaterials,
**dadurch gekennzeichnet**, daß
das textile Flächenmaterial aus vorverstreckten synthetischen Filamentgarnen, insbesondere aus Polyester, Polyamid und Polypropylen gewebt, gewirkt oder gestrickt wird und
das textile Flächenmaterial unter Anwendung von Druck und Wärme durch weitere Verstreckung der Filamentgarne strukturiert wird.

2. Verfahren nach Anspruch 1,
**dadurch gekennzeichnet**, daß
in das textile Flächenmaterial Filamentgarne oder Gespinste aus Kohle, Glas, Aramid und/oder Naturfasern, wie Wolle, Baumwolle, Cellulosefasern oder deren Gemisch eingearbeitet werden.

3. Verfahren nach einem der Ansprüche 1 oder 2,
**dadurch gekennzeichnet**, daß
das textile Flächenmaterial durch Tiefziehen strukturiert wird.

4. Verfahren nach mindestens einem der Ansprüche 1 bis 3,
**dadurch gekennzeichnet**, daß
auf das strukturierte textile Flächenmaterial durch Sprühen, Gießen oder Tauchen Harze, insbesondere Duroplaste, Thermoplaste, Zweikomponentensysteme, licht- und strahlenhärtende Systeme, Lacke aufgebracht werden.

5. Verfahren nach Anspruch 4,
**dadurch gekennzeichnet**, daß
die Harze auf das strukturierte textile Flächenmaterial in situ aufgebracht werden.

## Claims

1. A method for manufacturing a woven or knitted textile sheet material, characterised in that
the textile sheet material is woven, knitted or braided from pre-stretched synthetic filamentary yarns, in particular of polyester, polyamide and polypropylene; and
the textile sheet material is textured by means of further stretching through the application of pressure and heat.

2. A method according to claim 1, characterised in that, filamentary or spun elements made from carbon, glass, aramid and/or natural fibres such as wool, cotton, cellulose fibres or a mixture thereof, are worked into the textile sheet material.

3. A method according to claim 1 or 2 characterised in that the textile sheet material is textured by deep-drawing.

4. A method according to at least one of the claims 1 to 3 characterised in that resin, in particular thermoset, thermoplastic, two component systems, light and radiation hardening systems and varnish, is applied to the textured textile sheet material by spraying, pouring or dipping.

5. A method according to claim 4, characterised in that the resin is applied in situ to the textured textile sheet material.

## Revendications

1. Procédé pour la fabrication d'une matière plate textile tissée, tricotée ou maillée, caractérisé en ce que la matière plate textile est tissée, tricotée ou maillée à partir de fils à filaments synthétiques étirés préalablement, en particulier en polyester, polyamide ou polypropylène, et en ce que la matière plate textile est structurée par un étirage ultérieur des fils à filaments en utilisant une pression et de la chaleur.

2. Procédé suivant la revendication 1, caractérisé en ce que des fils à filament ou des fils en carbone, en verre, en aramide et/ou en fibres naturelles comme de la laine, du coton, des fibres cellulosiques ou leur mélange sont incorporés dans la matière plate textile.

3. Procédé suivant l'une des revendications 1 et 2, caractérisé en ce que la matière plate textile est structurée par emboutissage.

4. Procédé suivant au moins l'une des revendications 1 à 3, caractérisé en ce que des résines, en particulier des résines thermodurcissables, des résines thermoplastiques, des systèmes à deux composants, des systèmes durcissant à la lumière ou à des rayons, des laques, sont appliquées par pulvérisation, par coulée ou par trempage sur la matière plate textile structurée.

5. Procédé suivant la revendication 4, caractérisé en ce que les résines sont appliquées in situ sur la matière plate textile structurée.
